# EUROPEAN PATENT SPECIFICATION

(11) **EP 4 507 216 B1**
(45) Date of publication and mention of the grant of the patent: **13.05.2026**
(21) Application number: 23190039.0
(22) Date of filing: 07.08.2023
(51) Int. Cl.: H04B 10/272, H04B 10/50, H04B 10/60

(54) **SCRAMBLING AND DESCRAMBLING IN A PASSIVE OPTICAL NETWORK**
VER- UND ENTSCHLÜSSELUNG IN EINEM PASSIVEN OPTISCHEN NETZWERK
BROUILLAGE ET DESEMBROUILLAGE DANS UN RÉSEAU OPTIQUE PASSIF

(43) Date of publication of application: 12.02.2025
(73) Proprietor: Nokia Solutions and Networks Oy, 02610 Espoo (FI)
(72) Inventor: VAN DEN BERG, Eric Jozef Diane, 2560 Nijlen (BE); VERPLAETSE, Michiel, 9810 Nazareth (BE)
(74) Representative: Ipsilon Belgium

(56) References cited:
- CN-A- 104 168 124
- US-A1- 2016 352 498

## Description

### Field of the Invention

Various example embodiments relate to passive optical networks. In particular, to scrambling and descrambling of upstream data in passive optical networks.

### Background of the Invention

In a passive optical network, PON, at least one optical line terminal, OLT, at the network side connects to one or more optical network units, ONUs, at the user side. It can be desirable to physically separate some signal processing functions of the ONUs and/or the OLT by providing the signal processing functions on distinct circuitries that are interconnected. This allows implementing or incorporating the distinct circuitries in advantageous physical locations according to the signal processing functions they include.

For some emerging PON systems with an increased line rate, e.g. 50G-PON according to the ITU-T G.9804 standard, such a physical separation of signal processing functions is a challenge as the increased line rate requires a connection between the distinct circuitries with a high bandwidth, thereby increasing cost substantially. To this end, a demultiplexed interface can be used to exchange data streams between the interconnected circuitries at a lower baud rate compared to the full-rate PON signal.

The characteristics of these demultiplexed data streams, e.g. allowable consecutive identical bits and DC-balancing, are uncontrolled as demultiplexed data streams of full-rate PON signals are not standardized. For some full-rate data sequences, the corresponding demultiplexed data streams can therefore comprise undesirable bit sequences which can result in failure or suboptimal performance of the signal processing functions included in the circuitry that receives the demultiplexed data streams, e.g. long bit sequences of consecutive identical bits can induce failure of clock recovery at the receiving circuitry. CN104168124A discloses a distributed Optical Terminal Line for a PON.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to limit the probability of occurrence of undesirable bit sequences that impact signal processing functions when exchanging upstream data between distinct circuitries of an optical network unit or an optical line terminal.

This object is achieved, according to a first example aspect of the present disclosure, by an optical network unit, ONU, configured to transmit data to an optical line terminal, OLT, during upstream timeslots within a passive optical network. The ONU comprises a scrambler circuitry configured to scramble at least one data stream according to a periodic scrambling pattern, and a descrambler circuitry configured to descramble the at least one scrambled data stream according to the periodic scrambling pattern. The ONU further comprises at least one data channel for exchanging the at least one scrambled data stream between the scrambler circuitry and the descrambler circuitry. The scrambler circuitry is further configured to perform, during a period between the upstream timeslots: scrambling a predetermined reference sequence according to the periodic scrambling pattern, thereby obtaining a scrambled reference sequence; and sending the scrambled reference sequence to the descrambler circuitry over the at least one data channel.

The scrambler circuitry may be included in a first circuitry of the ONU, and the descrambler circuitry may be included in a second circuitry of the ONU. This first and second circuitry may each perform a portion of the signal processing functions of the ONU, e.g. electro-optical conversion of signals, clock and data recovery, equalization, and data processing. The first and second circuitry may further be located at different physical locations. The scrambler circuitry and the descrambler circuitry, and hence the first and second circuitry, are interconnected by means of the at least one data channel which provides an interface between the circuitries.

The baud rate of the at least one data stream exchanged over the at least one data channel may be substantially lower than the baud rate of data transmitted from the ONU to the OLT, i.e. the upstream line rate of the PON. For example, a 50G non-return-to-zero, NRZ, upstream signal can be exchanged between the circuitries as two demultiplexed 25G NRZ data streams over two data channels; as five demultiplexed 10G NRZ data streams over five data channels; or as a single 50G pulse amplitude modulation 4-level, PAM4, data stream over one data channel. Alternatively, the baud rate of the at least one data stream exchanged over the at least one data channel may have substantially the same baud rate as the data transmitted from the ONU to the OLT.

The predetermined reference sequence is a fixed bit sequence that is provided to both the scrambler circuitry and the descrambler circuitry, e.g. during ONU provisioning or at design time. The scrambler circuitry is configured to send the predetermined reference sequence, scrambled according to the periodic scrambling pattern, to the descrambler circuitry. This allows the descrambler circuitry to determine the periodic scrambling pattern, as it is aware of the unscrambled predetermined reference sequence and it receives the scrambled predetermined reference sequence.

The scrambled reference sequence is sent to the descrambler circuitry over the at least one data channel, i.e. instead of the at least one data stream. The at least one data stream includes data received by the ONU, e.g. from a connected service, that should be forwarded to the OLT within upstream bursts. The ONU may only transmit upstream bursts during an upstream timeslot assigned to the ONU. By sending the scrambled reference sequence to the descrambler circuitry over the at least one data channel during the period between consecutive upstream timeslots assigned to the ONU, interference with upstream burst data can be avoided as no optical signal will be transmitted from the ONU to the OLT during this period. It is an advantage that the same connection, i.e. the at least one data channel, can be used for exchanging burst data and for exchanging the scrambled reference sequence.

Sending the scrambled reference sequence to the descrambler circuitry further allows scrambling the at least one data stream with different periodic scrambling patterns in time, i.e. the periodic scrambling pattern can be adaptive. This has the advantage that the periodic scrambling pattern can be adapted dynamically to avoid the generation of undesirable bit sequences which result in failure or suboptimal performance of the signal processing functions included in the circuitry that receives the at least one scrambled data stream, also referred to as killer patterns. A killer pattern may, for example, be a scrambled data stream having an excessive amount of consecutive identical bits, thereby resulting in failure of clock recovery at the receiving circuitry, i.e. the descrambler circuitry. It is a further advantage that a shorter periodic scrambling pattern can be used which is less complex to implement, as the increased probability of occurrence of killer patterns associated with shorter periodic scrambling patterns can be controlled by dynamically adapting the periodic scrambling pattern.

Sending the scrambled reference sequence to the descrambler circuitry further allows restoring the alignment of the periodic scrambling pattern between upstream timeslots, i.e. between upstream bursts transmitted by the ONU. This has the further advantage that it makes the scrambling and descrambling more robust against the occurrence of bit slips.

According to an example embodiment, the predetermined reference sequence may be a sequence of bits that have the same logical value.

The predetermined reference sequence may thus be a bit sequence or bit string wherein all bits have the logical value 0, or all bits have the logical value 1. In doing so, the periodic scrambling pattern itself or an inverted version of the periodic scrambling pattern appears on the at least one data channel. This has the advantage that only limited processing, or even no processing, has to be performed on the bits received by the descrambler circuitry to determine the periodic scrambling pattern. It is a further advantage that no alignment of the predetermined reference sequence has to be performed. The bit length of the predetermined reference sequence may be fixed. The bit length may be provided to the scrambler circuitry and the descrambler circuitry.

According to an example embodiment, the descrambler circuitry may further be configured to perform, determining the periodic scrambling pattern for descrambling the at least one scrambled data stream based on the scrambled reference sequence and the predetermined reference sequence.

The descrambler circuitry receives the reference sequence, scrambled according to the periodic scrambling pattern, from the scrambling circuitry. As the predetermined reference sequence is known by the descrambler circuitry, e.g. provided in a memory, the descrambling circuitry can determine the periodic scrambling pattern used by the scrambling circuitry to scramble the reference sequence. Determining the periodic scrambling pattern may be performed during the period between the upstream timeslots.

According to an example embodiment, the descrambler circuitry may further be configured to perform, capturing at least a portion of the scrambled reference sequence within at least one capture buffer.

The descrambler circuitry may thus include at least one capture buffer that captures and stores a sequence of bits received by the descrambler circuitry, i.e. sent by the scrambler circuitry. The portion of the scrambled reference sequence that can be captured within the at least one capture buffer is determined by the size of the at least one capture buffer. The capture buffer size may be at least large enough to extract or determine the periodic scrambling pattern from the captured bit sequence. The capture buffer size may thus be smaller than the pattern length of the periodic scrambling pattern, equal to the pattern length of the periodic scrambling pattern, or larger than the pattern length of the periodic scrambling pattern.

The descrambler circuitry may comprise a plurality of capture buffers that are respectively associated with a plurality of data channels between the scrambler circuitry and the descrambler circuitry. Thus, the respective capture buffers may capture the received bits sent over the respective data channels. It is an advantage that capture buffers have a low complexity, and that capture buffers are typically available within ONUs, e.g. within a Serializer/Deserializer, SerDes, device.

According to an example embodiment, determining the periodic scrambling pattern may be based on the captured portion of the scrambled reference sequence and the predetermined reference sequence.

To this end, the descrambler circuitry may comprise a pattern extraction component or block configured to load the captured portion of the scrambled reference sequence from the at least one capture buffer. The pattern extraction component or block may further be configured to determine the periodic scrambling pattern from the loaded portion of the scrambled reference sequence and the predetermined reference sequence.

According to an example embodiment, the periodic scrambling pattern has a pattern length, and the at least one capture buffer has a buffer size; and wherein the buffer size is an integer multiple of the pattern length.

This has the advantage that the synchronization of the periodic scrambling pattern determined by the descrambler circuitry and the scrambled data stream received by the descrambler circuitry can be achieved automatically, as the descrambler circuitry is aware of the internal time relationship between capture events, the descrambling pattern memory, and the received scrambled data stream. This has the further advantage that, if the predetermined reference sequence is a sequence of bits that all have the logical value 0 or 1, the periodic scrambling pattern at the descrambler circuitry can be directly loaded from the at least one capture buffer without performing additional operations other than bit inversion on the captured bit sequence, i.e. without additional logic or correlators.

According to an example embodiment, the scrambler circuitry may further comprise a controller configured to perform, during the period between upstream timeslots, sending a control signal to the descrambler circuitry indicative of that the scrambler circuitry is sending the scrambled reference sequence to the descrambler circuitry over the at least one data channel.

In other words, a controller within the scrambler circuitry may signal the descrambler circuitry that the scrambled reference sequence is being send over the at least one data channel instead of the at least one scrambled data stream. The control signal may be a dedicated signal generated by the controller. Alternatively, the control signal may be an existing signal or bit sequence that is typically present in a PON, e.g. a burst-enable signal. This allows the descrambler circuitry to capture at least a portion of the scrambled reference sequence. It is an advantage that sending the control signal to the descrambler circuitry does not have to be precisely aligned with the start of sending the scrambled reference sequence over the at least one data channel as the scrambler-descrambler system is self-synchronized, i.e. no external time reference is required to achieve synchronization between the scrambler circuitry and descrambler circuitry.

According to an example embodiment, the scrambler circuitry may further be configured to perform adjusting the periodic scrambling pattern between the end of an upstream timeslot and a control signal that follows the upstream timeslot.

The periodic scrambling pattern that is used to scramble the at least one data stream and the predetermined reference sequence may thus be adapted or changed. This adaptation or change may be performed after the end of an upstream timeslot assigned to the ONU, but before a control signal that follows the upstream timeslot indicative of that the scrambler circuitry is sending the scrambled reference sequence. In other words, the adaptation of the periodic scrambling pattern may be performed during a portion of the period between upstream timeslots before the controller sends the control signal. This allows adaptivity of the periodic scrambling pattern on a burst-by-burst basis, i.e. between consecutive upstream timeslot. This has the further advantage that the probability of a killer pattern is reduced. Adjusting the periodic scrambling pattern can, for example, be achieved by changing the seed of a pattern generator, e.g. a linear-feedback shift register, LFSR. Alternatively or complementary, the adjusting may be triggered by the data stream within an upcoming upstream burst.

According to an example embodiment, the adjusting is based on data expected to be transmitted from the ONU to the OLT within a next upstream timeslot.

The periodic scrambling pattern may, for example, be adjusted or changed between the end of an upstream timeslot and a control signal if the scrambled data stream of upstream burst data to be transmitted within the next upstream timeslot can be a killer pattern. Adjusting the periodic scrambling pattern can thus allow further limiting the probability of occurrence of undesirable bit sequences that impact signal processing functions, i.e. killer patterns.

The upstream burst data transmitted from the ONU to the OLT within an upstream timeslot may comprise a preamble and a payload. Preferably, the adjusting is based on the preamble of the data expected to be transmitted by the ONU within the next upstream timeslot.

According to an example embodiment, the descrambler circuitry may further be configured to perform detecting bit errors by comparing the determined periodic scrambling pattern with one or more previously determined periodic scrambling patterns.

While the scrambler circuitry is sending the scrambled reference sequence, a plurality of subsequent bit sequence captures may be performed. The periodic scrambling pattern may be determined for each of these subsequently captured bit sequences. Bit errors in the captured bit sequences may be detected based on deviations in the subsequently determined periodic scrambling patterns, as the determined periodic scrambling pattern should be the same for the subsequent captures. The correct periodic scrambling pattern may for example be identified by performing a majority vote on the captured bits over the subsequent captures.

According to an example embodiment, the descrambler circuitry may further be configured to perform detecting bit errors by descrambling the scrambled reference sequence according to the periodic scrambling pattern determined by the descrambler circuitry.

To this end, the descrambler circuitry may determine the periodic scrambling pattern for descrambling the at least one scrambled data stream. Thereafter, while still receiving the scrambled reference sequence from the scrambler circuitry, the descrambler circuitry may descramble the received scrambled reference sequence according to the determined periodic scrambling pattern. If the descrambling does not yield the predetermined reference sequence, bit errors were present when determining the periodic scrambling pattern.

According to an example embodiment, the scrambler circuitry may be included in a first circuitry of the ONU configured to process the at least one data stream; and wherein the descrambling circuitry may be included in a second circuitry of the ONU configured to interface with an optical fibre of the passive optical network to transmit the data to the optical line terminal.

The second circuitry may sometimes also be referred to as the 'PHY' which implements physical layer protocols of the PON system, e.g. opto-electrical conversion of signals, and electro-optical conversion of signals, clock and data-recovery, and equalization. The first circuitry may sometimes also be referred to as the 'HOST' which implements, amongst others, higher layer protocols of the PON system.

According to a second example aspect, an optical line terminal, OLT, is disclosed configured to receive data from one or more optical network units, ONU, during respective upstream timeslots within a passive optical network. The OLT comprises a scrambler circuitry configured to scramble at least one data stream according to a periodic scrambling pattern, and a descrambler circuitry configured to descramble the at least one scrambled data stream according to the periodic scrambling pattern. The OLT further comprises at least one data channel for exchanging the at least one scrambled data stream between the scrambler circuitry and the descrambler circuitry. The scrambler circuitry is further configured to perform, during a period between respective upstream timeslots: scrambling a predetermined reference sequence according to the periodic scrambling pattern, thereby obtaining a scrambled reference sequence; and sending the scrambled reference sequence to the descrambler circuitry over the at least one data channel.

According to a third example aspect, a method is disclosed comprising, during a period between upstream timeslots for transmitting data from an optical network unit, ONU, to an optical line terminal, OLT, within a passive optical network:
- by a scrambler circuitry within the ONU, scrambling a predetermined reference sequence according to a periodic scrambling pattern, thereby obtaining a scrambled reference sequence; wherein the scrambler circuitry is configured to scramble at least one data stream according to the periodic scrambling pattern; and
- sending the scrambled reference sequence to a descrambler circuitry within the ONU over at least one data channel for exchanging the at least one scrambled data stream between the scrambler circuitry and the descrambler circuitry; wherein the descrambler circuitry is configured to descramble the at least one data stream according to the periodic scrambling pattern.

According to a fourth example aspect, a method is disclosed comprising, during a period between respective upstream timeslots for receiving data by an optical line terminal, OLT, from one or more optical network units, ONUs, within a passive optical network:
- by a scrambler circuitry within the OLT, scrambling a predetermined reference sequence according to a periodic scrambling pattern, thereby obtaining a scrambled reference sequence; wherein the scrambler circuitry is configured to scramble at least one data stream according to the periodic scrambling pattern; and
- sending the scrambled reference sequence to a descrambler circuitry within the OLT over at least one data channel for exchanging the at least one scrambled data stream between the scrambler circuitry and the descrambler circuitry; wherein the descrambler circuitry is configured to descramble the at least one data stream according to the periodic scrambling pattern.

### Brief Description of the Drawings

Fig. 1 shows a schematic block diagram of an example passive optical network;
Fig. 2 shows an example embodiment of an optical network unit, ONU, comprising a scrambler circuitry and descrambler circuitry for scrambling and descrambling upstream data in a passive optical network;
Fig. 3 shows an example embodiment of an optical line terminal, OLT, comprising a scrambler circuitry and descrambler circuitry for scrambling and descrambling upstream data in a passive optical network; and
Fig. 4 shows an example embodiment of the scrambler circuitry and descrambler circuitry for an optical network unit or an optical line terminal, according to embodiments.

### Detailed Description of Embodiment(s)

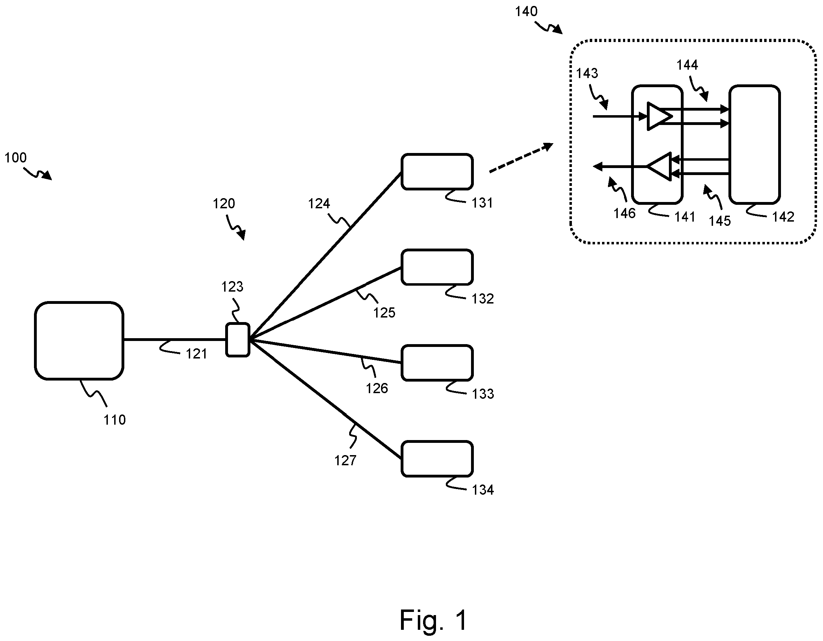

Fig.1 shows a schematic block diagram of an example point-to-multipoint optical network 100, in particular a passive optical network, PON. The optical network 100 comprises an optical line terminal 110, OLT, and a plurality of optical network units, ONUs 131, 132, 133, 134 connected via an optical distribution network, ODN 120. In this example, the OLT 110 is connected to four ONUs 131, 132, 133, 134, however, the OLT 110 may be connected to fewer or more endpoints. The ODN 120 has a tree structure comprising an optical feeder fibre 121, one or more passive optical splitters/multiplexors 123, and a plurality of optical distribution fibres or drop fibres 124, 125, 126, 127 that connect the splitter/multiplexor 123 to the respective ONUs 131, 132, 133, 134. In the downstream, the passive optical splitter/multiplexor 123 splits the optical signal coming from the OLT 110 into lower power optical signals for the connected ONUs 131, 132, 133, 134, while in the upstream direction, the passive optical splitter/multiplexor 123 multiplexes the optical signals coming from the connected ONUs 131, 132, 133, 134 into a burst signal for the OLT 110.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

ONUs 131, 132, 133, 134 typically comprise a plurality of components that perform various signal processing functions, e.g. an optoelectronic transceiver for converting electrical signals to optical signals and vice-versa; a laser diode for transmitting optical signals, a photodiode for receiving optical signals, and a signal processing unit for modulating, demodulating, error correction, and protocol handling.

OLTs 110 also typically comprise a plurality of components that perform various signal processing functions, e.g. an optoelectronic transceiver for converting electrical signals to optical signals and vice-versa; a laser diode for transmitting optical signals, a photodiode for receiving optical signals, and a signal processing unit for modulating, demodulating, error correction, and protocol handling.

These components in both ONUs 131, 132, 133, 134 and OLTs 110 are typically interconnected to form a sequence or pipeline such that each component contributes to processing signals for transmission or reception. It can be desirable to physically separate some signal processing functions of the ONUs 131, 132, 133, 134 and/or the OLT 110 by providing the signal processing functions on distinct circuitries that are interconnected. Physically separating signal processing functions thus refers to providing some components of the ONUs 131, 132, 133, 134 or the OLT 110 onto distinct circuitries that are interconnected, thereby enabling the distinct circuitries to respectively perform a portion of the signal processing functions of the ONU or OLT. In other words, the sequence or pipeline of signal processing components is distributed across distinct interconnected circuitries. This allows implementing or incorporating the respective circuitries in advantageous physical locations according to their respective signal processing functions, e.g. 'PHY'-layer functions can be positioned close to the optical connections, while 'HOST'-layer functions can be positioned on a line-card.

For some emerging PON systems with an increased line rate, e.g. 50G-PON according to the ITU-T G.9804 standard, such a physical separation of signal processing functions is a challenge as the increased line rate requires a connection between the distinct circuitries with a high bandwidth, thereby increasing cost substantially. To this end, a demultiplexed interface 140 can be used to exchange data streams 144, 145 between the interconnected circuitries 141, 142 at a lower baud rate compared to the full-rate PON signal.

For example, in the downstream, a 50G downstream signal 143 modulated according to a non-return-to-zero, NRZ, modulation format may be received by a first circuitry 141 of an ONU 131 that is configured to receive and convert the optical signal to an electrical signal. The 50G NRZ downstream signal 143 may be demultiplexed to two 25G NRZ signals 144 for exchanging it with a second circuitry 142 of ONU 131. The second circuitry 142 may, for example, be configured to further process the signal. As such, two low bandwidth connections 144 can be used between the circuitries 141, 142 instead of a single high bandwidth connection.

In the upstream of this example, the data to be transmitted from ONU 131 to the OLT 110 may be exchanged by the second circuitry 142 with the first circuitry 141 as two 25G NRZ signals 145. The 25G NRZ signals 145 may be multiplexed to a single 50G NRZ signal 146 before transmitting it to the OLT 110 as an optical signal. Again, two low bandwidth connections 145 can be used between the circuitries 141, 142 instead of a single high bandwidth connection.

However, such demultiplexed data streams 144, 145 of full-rate PON signals 143, 146 are not standardized. As such, the characteristics of these demultiplexed data streams 144, 145, e.g. the allowable consecutive identical bits and DC-balancing, are uncontrolled. For some full-rate data sequences 143, 146, the corresponding demultiplexed data streams 144, 145 can therefore comprise undesirable bit sequences or symbol sequences which can result in failure or suboptimal performance of the signal processing functions included in the circuitry 141, 142 that receives the demultiplexed data streams 144, 145, e.g. long sequences of consecutive identical bits or symbols can induce failure of clock recovery at the receiving circuitry. This can result in failure or suboptimal performance of the ONUs 131, 132, 133, 134 or the OLT 110. Such data streams that comprise undesirable bit sequences which result in failure or suboptimal performance of signal processing functions may be referred to as killer patterns or killer bit sequences. It is thus desirable to avoid or at least limit the probability of occurrence of killer patterns when providing a demultiplexed connection or interface between circuitries of an OLT or an ONU.

This can be achieved by scrambling the demultiplexed data stream 144, 145 prior to exchanging or sending it to the receiving circuitry by means of a scrambling circuitry. A scrambling circuitry typically manipulates a data stream prior to sending it to a receiving circuitry. The manipulation, i.e. the scrambling, is typically determined by a scrambling pattern. A descrambler circuitry within the receiving circuitry reverses the manipulations based on the used scrambling pattern, thereby retrieving the original data stream. This allows replacing bit sequences with other bit sequences, i.e. scrambled bit sequences, which changes the probability of occurrence of killer patterns, i.e. vexatious bit sequences. As such, scrambling the demultiplexed data stream 144, 145 may avoid the generation of killer patterns, e.g. by avoiding long sequences of bits of the same value.

A problem with scrambling and descrambling data streams is that some input sequences still result in undesirable output sequences, i.e. killer patterns. A further challenge is that a longer scrambling pattern typically reduces the probability of occurrence of a killer pattern, but increases the complexity of implementation substantially. Another problem is that independent of the length of the scrambling pattern, at least one input data sequence can result in the occurrence of a killer pattern. It is a further problem that the scrambling pattern typically has to be provided to the descrambler circuitry before exchanging scrambled data over a data channel.

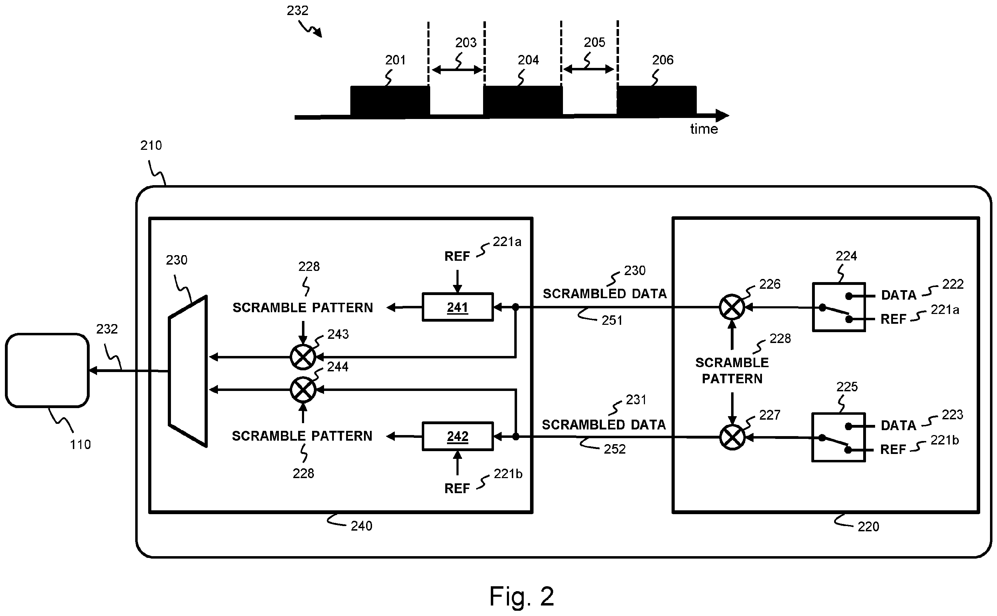

Fig. 2 shows an example embodiment of an optical network unit, ONU 210, comprising a scrambler circuitry 220 and descrambler circuitry 240 for scrambling and descrambling upstream data 232 to be transmitted by the ONU 210 in a PON, which solves or at least alleviates above-mentioned challenges and problems. The scrambler circuitry 220 is configured to scramble 226, 227 at least one data stream 222, 223. Data streams 222, 223 may comprise data originating from a service or application connected to ONU 210 (not shown in Fig. 2) that is to be transmitted upstream to an OLT 110. Data streams 222, 223 may, for example, be a low level data stream comprising data packets wrapped by a PON protocol. The respective data streams 222, 223 may be obtained by demultiplexing (not shown in Fig. 2) a data stream received from the connected service or application. Scrambler circuitry 220 is configured to scramble 226, 227 the data streams 222, 223 according to a periodic scrambling pattern 228, thereby obtaining respective scrambled data streams 230, 231.

The descrambler circuitry 240 is configured to descramble 243, 244 the at least one scrambled data stream 230, 231. Scrambler circuitry 220 is connected to descrambler circuitry 240 by means of at least one data channel 251, 252. The scrambled data streams 230, 231 are exchanged between the circuitries 220, 240 over the respective data channels 251, 252. Data channels 251, 252 thus provide a demultiplexed interface between the scrambler circuitry 220 and the descrambler circuitry 240.

After descrambling 243, 244 the scrambled data streams 230, 231, the descrambled data streams are multiplexed 230 to an upstream signal 232 that can be transmitted from the ONU 210 to the OLT 110 over the PON. The baud rate of the data streams 230, 231 exchanged over the data channels 251, 252 may be substantially lower than the baud rate of the upstream signal 232 transmitted from the ONU to the OLT, i.e. the upstream line rate of the PON.

It will be apparent that the amount of data channels 251, 252 can vary according to how a data stream received from a connected service or application is demultiplexed into data streams 222, 223 and how descrambled data streams are multiplexed into the upstream signal 232 transmitted from the ONU to the OLT. For example, two demultiplexed 25G NRZ data streams 222, 223 can be exchanged over two data channels 251, 252; five demultiplexed 10G NRZ data streams can be exchanged over five data channels; or a single 50G pulse amplitude modulation 4-level, PAM4, data stream can be exchanged over one data channel. Alternatively, the baud rate of a data stream 230, 231 exchanged over a data channel 251, 252 may have substantially the same baud rate as the upstream signal 232. This may, for example, occur when data 222, 223 is exchanged between the circuitries 220, 240 over a single data channel 251, 252 without demultiplexing.

It will further be apparent that the scrambled data streams 230, 231 that are exchanged over respective data channels 251, 252 may be scrambled according to different periodic scrambling patterns 228. For example, scrambled data 230 may be obtained by scrambling 226 data 222 according to a first periodic scrambling pattern, and scrambled data 231 may be obtained by scrambling 227 data 223 according to a second periodic scrambling pattern.

The upstream signal 232, i.e. an optical signal or burst, is transmitted to OLT 110 during an upstream timeslot 201, 204, 206 assigned to ONU 210. Such timeslots 201, 204, 206 or transmission opportunities are typically allocated to the respective ONUs in a PON during which they are allowed to transmit data to the OLT 110. The upstream timeslots 201, 204, 206 assigned to ONU 210 are recurrent in time. The consecutive recurrent upstream timeslots 201, 204, 206 assigned to the same ONU 210 are separated in time by a period 203, 205 during which ONU 210 may not transmit upstream bursts.

During the period 203, 205 between the upstream timeslots 201, 204, 206 assigned to ONU 210, the scrambler circuitry 220 is configured to perform scrambling a predetermined reference sequence 221a, 221b according to the periodic scrambling pattern 228, thereby obtaining a scrambled reference sequence. In other words, during periods 203, 205, the scrambler circuitry 220 may scramble a predetermined reference sequence 221a, 221b instead of data streams 222, 223. This is illustrated by switches 224, 225 in Fig. 2. The predetermined reference sequence 221a, 221b is a fixed bit sequence that is provided to both the scrambler circuitry 220 and the descrambler circuitry 240, e.g. during ONU provisioning or at design time. It will be apparent that the respective predetermined reference sequences 221a, 221b may be the same sequence or may be different sequences. For example, the predetermined reference sequence 221a and 221b may both be a sequence of bits that all have the logical value 0. Alternatively, the predetermined reference sequence 221a may for example be a sequence of bits that all have the logical value 0, and the predetermined reference sequence 221b may for example be a sequence of bits that all have the logical value 1.

The scrambler circuitry 220 is further configured to perform sending the scrambled reference sequence to the descrambler circuitry 240 over the data channels 251, 252. The descrambler circuitry 240 thus receives a scrambled version of the reference sequence 221a, 221b. The descrambler circuitry 240 may further comprise means 241, 242 configured to perform determining the periodic scrambling pattern 228 from the received scrambled reference sequence based on the predetermined reference sequence 221a, 221b. The descrambler circuitry 240 can thus determine the periodic scrambling pattern 228 currently used by scrambling circuitry 220. This allows to use the determined periodic scrambling pattern 228 for descrambling 243, 244 scrambled data received from the scrambling circuitry 220, e.g. the scrambled data streams 230, 231 of the next upstream burst.

By sending the scrambled reference sequence to the descrambler circuitry 240 during the period 203, 205 between consecutive upstream timeslots 201, 204, 206 assigned to the ONU 210, interference with upstream burst data can be avoided as no optical signal will be transmitted from the ONU to the OLT during this period 203, 205. It is an advantage that the same connection, i.e. the at least one data channel 251, 252, can be used for exchanging burst data and for exchanging the scrambled reference sequence.

Sending the scrambled reference sequence to the descrambler circuitry 240 further allows scrambling 226, 227 the at least one data stream 222, 223 with different periodic scrambling patterns 228 in time, i.e. the periodic scrambling pattern 228 can be adaptive. For example, a first periodic scrambling pattern may be used to scramble the data streams 222, 223 during upstream timeslot 201. During period 203, the periodic scrambling pattern may be changed or adapted to a second scrambling pattern. This second scrambling pattern can be provided to descrambler circuitry 240 during period 203, according to the example embodiment described above. The second periodic scrambling pattern may then be used to scramble the data streams 222, 223 during upstream timeslot 204.

This has the advantage that the periodic scrambling pattern 228 can be adapted dynamically to avoid the generation of killer patterns, i.e. a scrambled data stream 230, 231 that would result in failure or suboptimal performance of one or more signal processing functions within the ONU 210. It is a further advantage that a shorter periodic scrambling pattern can be used which is less complex to implement, as the increased probability of occurrence of killer patterns associated with shorter periodic scrambling patterns can be controlled by dynamically adapting the periodic scrambling pattern.

Sending the scrambled reference sequence to the descrambler circuitry 240 further allows restoring the alignment of the periodic scrambling pattern 228 between upstream timeslots 201, 204, 206, i.e. between upstream bursts transmitted by the ONU 210. This has the further advantage that it makes the scrambling and descrambling more robust against the occurrence of bit slips.

The predetermined reference sequence 221a, 221b may be a sequence of bits that have the same logical value. The predetermined reference sequence 221a, 221b may thus be a bit sequence or bit string of a certain length wherein all bits have the logical value 0, or all bits have the logical value 1. In doing so, the periodic scrambling pattern 228 itself appears on the data channels 251, 252 or an inverted version of the periodic scrambling pattern appears on the data channels 251, 252. This has the advantage that only limited processing, or even no processing, has to be performed on the bits received by the descrambler circuitry 240 to determine the periodic scrambling pattern 228, e.g. by means 241, 242. The bit length of the predetermined reference sequence 228 may be fixed. The bit length may be provided to the scrambler circuitry 220 and the descrambler circuitry 240.

The scrambler circuitry 220 may further be included in a first circuitry of the ONU 210, and the descrambler circuitry 240 may be included in a second circuitry of the ONU 210. This first and second circuitry may each perform a portion of the signal processing functions of the ONU 210, e.g. electro-optical conversion of signals, clock and data recovery, equalization, and data processing.

The first circuitry that comprises the scrambler circuitry 220 may be configured to process the data streams 222, 223, e.g. the 'HOST'-layer of ONU 210 that implements higher layer protocols of the PON system. The second circuitry that comprises the descrambler circuitry 240 may be configured to interface with an optical fibre of the PON to transmit the data to the OLT 110, e.g. the 'PHY'-layer of ONU 210 that implements physical layer protocols of the PON system such as opto-electrical conversion of signals, electro-optical conversion of signals, clock and data-recovery, and equalization.

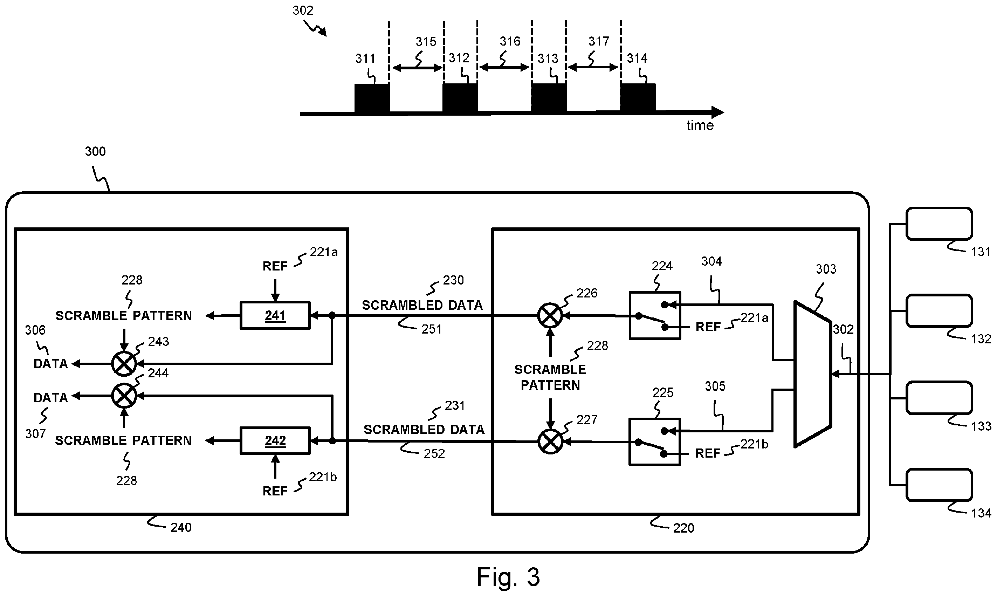

Fig. 3 shows an example embodiment of an optical line terminal, OLT 300, comprising the scrambler circuitry 220 and the descrambler circuitry 240 for scrambling and descrambling upstream data 302 received by the OLT 300. The scrambler circuitry 220 may be configured to scramble at least one data stream 304, 305. Data streams 304, 305 comprise burst data originating from an ONU 131, 132, 133, 134 within the PON. The respective data streams 304, 305 may be obtained by demultiplexing 303 upstream signals or bursts 302 received from the respective ONUs 131, 132, 133. Scrambler circuitry 220 is configured to scramble 226, 227 the data streams 304, 305 according to a periodic scrambling pattern 228, thereby obtaining respective scrambled data streams 230, 231.

The descrambler circuitry 240 may be configured to descramble 243, 244 the at least one scrambled data stream 230, 231. Scrambler circuitry 220 is connected to descrambler circuitry 240 by means of at least one data channel 251, 252. The scrambled data streams 230, 231 are exchanged between the circuitries 220, 240 over the respective data channels 251, 252. Data channels 251, 252 thus provide a demultiplexed interface between the scrambler circuitry 220 and the descrambler circuitry 240.

After descrambling 243, 244 the scrambled data streams 230, 231, the descrambled data streams 306, 307 may be multiplexed (not shown in Fig. 3) to retrieve the burst data 302 received by the OLT 300. The baud rate of the data streams 230, 231 exchanged over the data channels 251, 252 is substantially lower than the baud rate of the upstream signal 302 received from the ONUs 131, 132, 133, 134, i.e. the upstream line rate of the PON.

The upstream signals or bursts 302 are received by the OLT 300 during respective upstream timeslot 311, 312, 313, 314 assigned to the respective ONUs 131, 132, 133, 134. During timeslots 311, 312, 313, 314 the respective ONUs 131, 133, 134 are allowed to transmit data to the OLT 300. For example, timeslot 311 may be assigned to ONU 131, thereby allowing ONU 131 to transmit an upstream burst during timeslot 311. Timeslot 312 may be assigned to ONU 132, timeslot 313 may be assigned to ONU 133, timeslot 314 may be assigned to ONU 134. The consecutive upstream timeslots assigned to the respective ONUs 131, 132, 133, 134 may be separated by a period 315, 316, 317, sometimes also referred to as a guard time. During these periods 315, 316, 317, the OLT 300 does not expect to receive any valuable data, i.e. upstream bursts 302.

During the period 315, 316, 317 between the upstream timeslots 311, 312, 313, 314 assigned to the respective ONUs 131, 132, 133, 134, the scrambler circuitry 220 is configured to perform scrambling a predetermined reference sequence 221a, 221b according to the periodic scrambling pattern 228, thereby obtaining a scrambled reference sequence. In other words, during periods 315, 316, 317, the scrambler circuitry 220 may scramble a predetermined reference sequence instead of data streams 304, 305. This is illustrated by switches 224, 225 in Fig. 3. The predetermined reference sequence 221a, 221b is a fixed bit sequence that is provided to both the scrambler circuitry 220 and the descrambler circuitry 240, e.g. during OLT provisioning or at design time.

The scrambler circuitry 220 is further configured to perform sending the scrambled reference sequence to the descrambler circuitry 240 over the data channels 251, 252. The descrambler circuitry 240 thus receives a scrambled version of the reference sequence 221a, 221b. The descrambler circuitry 240 may further comprise means 241, 242 configured to perform determining the periodic scrambling pattern 228 from the received scrambled reference sequence based on the predetermined reference sequence 221a, 221b. The descrambler circuitry 240 can thus determine the periodic scrambling pattern 228 currently used by scrambling circuitry 220. This allows to use the determined periodic scrambling pattern 228 for descrambling 243, 244 scrambled data received from the scrambling circuitry 220, e.g. the scrambled data streams 230, 231 of the next upstream burst.

By sending the scrambled reference sequence to the descrambler circuitry 240 during the periods 315, 316, 317 between consecutive upstream timeslots 311, 312, 313, 314 assigned to the respective ONUs 131, 132, 133, 134, interference with upstream burst data 302 can be avoided as no burst data will be received at the OLT 300 during these periods. It is an advantage that the same connection, i.e. the at least one data channel 251, 252, can be used for exchanging burst data and for exchanging the scrambled reference sequence.

Sending the scrambled reference sequence to the descrambler circuitry 240 further allows scrambling 226, 227 the at least one data stream 304, 305 with different periodic scrambling patterns 228 in time, i.e. the periodic scrambling pattern 228 can be adaptive. This has the advantage that the periodic scrambling pattern 228 can be adapted dynamically to avoid killer patterns, i.e. a scrambled data stream 230, 231 that would result in failure of one or more signal processing functions within the OLT 300. It is a further advantage that a shorter periodic scrambling pattern can be used which is less complex to implement, as the increased probability of killer patterns associated with shorter periodic scrambling patterns can be controlled by dynamically adapting the periodic scrambling pattern.

Sending the scrambled reference sequence to the descrambler circuitry 240 further allows restoring the alignment of the periodic scrambling pattern 228 between upstream timeslots 311, 312, 313, 314, i.e. between upstream bursts received by the OLT 300. This has the further advantage that it makes the scrambling and descrambling more robust against the occurrence of bit slips.

The scrambler circuitry 220 may further be included in a first circuitry of the OLT 300, and the descrambler circuitry 240 may be included in a second circuitry of the OLT 300. This first and second circuitry may each perform a portion of the signal processing functions of the OLT 300, e.g. opto-electrical conversion of signals, electro-optical conversion of signals, clock and data recovery, equalization, and data processing.

The first circuitry that comprises the scrambler circuitry 220 may be configured to interface with an optical fibre of the PON to receive the upstream bursts 302 from the respective ONUs 131, 132, 133, 134, e.g. the 'PHY'-layer of OLT 300 that implements physical layer protocols of the PON system such as opto-electrical conversion of signals, electro-optical conversion of signals, clock and data-recovery, and equalization. The second circuitry that comprises the descrambler circuitry 240 may be configured to process the data streams 304, 305, i.e. the received upstream data 302. For example, the 'HOST'-layer of OLT 300 that implements higher layer protocols of the PON system.

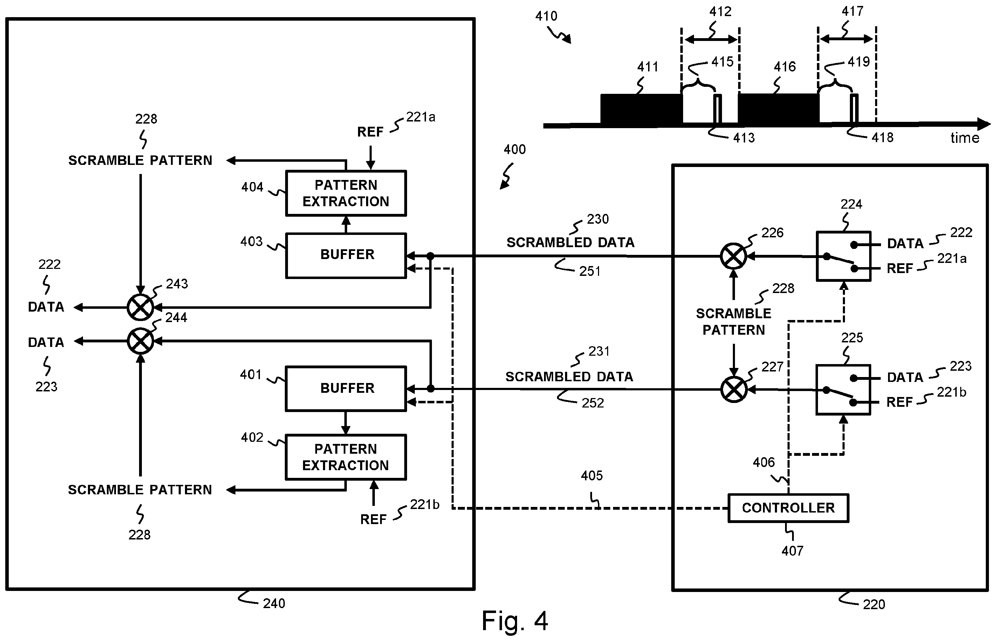

Fig. 4 shows an example embodiment 400 of the scrambler circuitry and descrambler circuitry for an ONU or an OLT, according to embodiments of the disclosure. It will be apparent that the example embodiment 400 of the scrambler circuitry and descrambler circuitry may be incorporated within an ONU as described in relation to Fig. 2, or within an OLT as described in relation to Fig. 3. The consecutive upstream timeslots 411, 416 shown in Fig. 4 may thus represent timeslots assigned to respective ONUs when embodiment 400 is implemented within an OLT; or may represent timeslots assigned to a single ONU when embodiment 400 is implemented within an ONU.

Descrambler circuitry 240 may further be configured to perform capturing at least a portion of the scrambled reference sequence within at least one capture buffer 401, 403. The descrambler circuitry 240 may thus include at least one capture buffer 401, 403 that captures and stores a sequence of a certain amounts of bits received by the descrambler circuitry 240, i.e. bits of the scrambled reference sequence that are sent by the scrambler circuitry 220.

The descrambler circuitry 240 may comprise a plurality of capture buffers 401, 403 that are respectively associated with a plurality of data channels 251, 252 between the scrambler circuitry 220 and the descrambler circuitry 240. The respective capture buffers 401, 403 may thus capture received bits of the scrambled reference sequence sent over the respective data channels 251, 252. It is an advantage that using capture buffers 401, 403 is associated with low complexity, and that capture buffers are typically incorporated in Serializer/Deserializer, SerDes, devices which are typically available within ONUs and OLTs.

The descrambler circuitry 240 may further comprise means 402, 404 configured to perform determining the periodic scrambling pattern 228 based on the captured portion of the scrambled reference sequence and the predetermined reference sequence 221a, 221b. The means 402, 404 may, for example, be a pattern extraction component or block that implements logic or correlators to load the captured portion of the scrambled reference sequence from the capture buffers 401, 403. The pattern extraction component or block 402, 404 may further be configured to determine the periodic scrambling pattern 228 from the loaded portion of the scrambled reference sequence and the predetermined reference sequence 221a, 221b.

It will further be apparent that a single capture buffer and a single pattern extraction component or block may be used for determining the periodic scrambling pattern 228 for descrambling two or more scrambled data streams 230, 231. In this case, scrambler circuitry 220 is configured to scramble 226, 227 a single predetermined reference sequence 221a, 221b according to a single periodic scrambling pattern 228. For example, the descrambler circuitry 240 shown in Fig. 4 may only comprise capture buffer 401 and pattern extraction block 402 to obtain the periodic scrambling pattern 228 for descrambling 243 scrambled data stream 230 and for descrambling 244 scrambled data stream 231.

The at least one capture buffer 401, 402 may be characterized by a buffer size, e.g. defined by the amounts of bits that can be captured within the buffer. The portion of the scrambled reference sequence that can be captured within the at least one capture buffer 401, 403 is thus determined by the buffer size. The capture buffer size may be at least large enough to extract or determine the periodic scrambling pattern 228 from the captured bit sequence. The capture buffer size may thus be smaller than the pattern length of the periodic scrambling pattern, equal to the pattern length of the periodic scrambling pattern, or larger than the pattern length of the periodic scrambling pattern.

Preferably, the buffer size of capture buffers 401, 403 may be an integer multiple of the pattern length of the periodic scrambling pattern. This has the further advantage that synchronization of the periodic scrambling pattern 228 determined by the descrambler circuitry and the scrambled data stream 230, 231 received by the descrambler circuitry 240 can be achieved automatically, as the descrambler circuitry 240 is aware of the internal time relationship between capture events, the descrambling pattern memory, and the received scrambled data stream. This has the advantage that, if the predetermined reference sequence 221a, 221b is a sequence of bits that all have the logical value 0 or 1, the periodic scrambling pattern 228 at the descrambler circuitry 240 can be directly loaded from the capture buffer 401, 403 without performing additional operations other than bit inversion on the captured bit sequence, i.e. without additional logic or correlators.

The scrambler circuitry 220 may further comprise a controller 407 configured to perform, during the period 412, 417 between upstream timeslots 411, 416, sending a control signal 405 to the descrambler circuitry 240. Fig. 4 shows an example embodiment of the timing 413, 418 of sending such a control signal 405. The control signal 405 may be indicative of that the scrambler circuitry 220 is sending the scrambled reference sequence to the descrambler circuitry 240 over the data channels 251, 252. In other words, a controller 407 within the scrambler circuitry 220 may signal the descrambler circuitry 240 that the scrambled reference sequence is being send over the at least one data channel 251, 252 instead of the at least one scrambled data stream 230, 231. Alternatively, controller 407 may be included in the descrambler circuitry 240. Preferably, controller 407 is included in a circuitry of an ONU or OLT configured to process the data streams 222, 223, e.g. the 'HOST'-layer of an ONU or the 'HOST'-layer of an OLT. As such, controller 407 may preferably be included in the scrambler circuitry 220 of an ONU as illustrated in Fig. 2, or in the descrambler circuitry 240 of an OLT as illustrated in Fig. 3.

The control signal 405 may be a dedicated signal generated by controller 407, i.e. a signal generated specifically for the purpose of signalling the presence of the scrambled reference sequence on the data channels 251, 252 between the circuitries 220, 240. Alternatively, control signal 405 may be an existing signal or bit sequence that is typically present in a PON, e.g. a burst-enable signal.

The control signal 405 allows the descrambler circuitry 240 to capture at least a portion of the scrambled reference sequence being send by the scrambler circuitry 220. It is an advantage that sending the control signal 405 to the descrambler circuitry 220 does not have to be precisely aligned with the start of sending the scrambled reference sequence over the at least one data channel as the scrambler-descrambler system is self-synchronized, i.e. no external time reference is required to achieve synchronization between the scrambler circuitry 220 and descrambler circuitry 240.

Controller 407 may further be configured to control the sending of the scrambled reference sequence to the descrambler circuitry 240. This can be achieved by providing a control signal to means 224, 225 configured to switch between providing data stream 222, 223 as input to the scrambling 226, 227, and providing the predetermined reference sequence as input to the scrambling 226, 227.

The scrambler circuitry may further be configured to perform adjusting, changing, or adapting the periodic scrambling pattern 228 during periods 415, 419, i.e. between the end of an upstream timeslot 411, 416 and a subsequent control signal 413, 418. In other words, the adaptation or change of the periodic scrambling pattern 228 may be performed during a portion 415, 419 of periods 412, 417, before the controller sends 413, 418 the control signal. This allows adapting the periodic scrambling pattern 228 on a burst-by-burst basis, i.e. between consecutive upstream timeslot 411, 416. This has the further advantage that the probability of occurrence of a killer pattern is reduced. Adjusting the periodic scrambling pattern 228 can, for example, be achieved by changing the seed of a pattern generator, e.g. a linear-feedback shift register, LFSR.

Alternatively or complementary, the adjusting may be triggered by the data stream 222, 223 within an upcoming upstream burst. The adjusting may be based on data expected to be transmitted during an upstream timeslot 411, 416. The upstream burst data may comprise a preamble and a payload. Preferably, the adjusting is based on the preamble of the data. For example, if system 400 is incorporated within an ONU, the adjusting may be based on the data expected to be transmitted from the ONU to the OLT within a next upstream timeslot assigned to the ONU. If the system 400 is incorporated within an OLT, the adjusting may for example be based on the preamble data expected to be received by the OLT within a next upstream timeslot assigned to a respective ONU.

The periodic scrambling pattern 228 may, for example, be adjusted or changed if the scrambled data stream 230, 231 of upstream burst data to be transmitted within the next upstream timeslot 411, 416 can be a killer pattern, e.g. a demultiplexed scrambled data stream 230, 231 that has a long sequence of consecutive identical bits. Adjusting the periodic scrambling pattern can thus allow further limiting the probability of occurrence of undesirable bit sequences that impact signal processing functions, i.e. killer patterns.

Descrambler circuitry 240 may further be configured to perform detecting bit errors within the scrambled reference sequence, which can result in an incorrectly determined scrambling pattern 228 at the descrambler circuitry 240. This can be achieved by comparing the determined periodic scrambling pattern 228 with one or more previously determined periodic scrambling patterns.

For example, while scrambler circuitry 220 is sending the scrambled reference sequence, a plurality of bit sequence captures may be performed subsequently by capture buffers 401, 403. Therefrom, a plurality of periodic scrambling patterns 228 may be determined subsequently by means 402, 404. In the absence of bit errors, the subsequently determined periodic scrambling patterns should be the same. A bit error in one or more of the captured portions of the scrambled reference sequence can thus be detected by deviations in the subsequently determined periodic scrambling patterns. The correct periodic scrambling pattern may, for example, be identified by performing a majority vote on the captured bits over the subsequent captures.

Alternatively, detecting bit errors within the scrambled reference sequence can be achieved by descrambling 243, 244 the scrambled reference sequence according to the periodic scrambling pattern 228 determined by the descrambler circuitry 240. To this end, the descrambler circuitry 240 may determine the periodic scrambling pattern 228. Thereafter, while still receiving the scrambled reference sequence from the scrambler circuitry 220, the descrambler circuitry 240 may descramble 243, 244 the received scrambled reference sequence according to the determined periodic scrambling pattern 228. If the descrambling 243, 244 does not yield the predetermined reference sequence 221a, 221b, bit errors were present when determining the periodic scrambling pattern.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical network unit (210), ONU, configured to transmit data (232) to an optical line terminal (110), OLT, during upstream timeslots (201, 204, 206) within a passive optical network; wherein the ONU comprises a scrambler circuitry (220) configured to scramble (226, 227) at least one data stream (222, 223) according to a periodic scrambling pattern (228), and a descrambler circuitry (240) configured to descramble (243, 244) the at least one scrambled data stream (230, 231) according to the periodic scrambling pattern; and wherein the ONU further comprises at least one data channel (251, 252) for exchanging the at least one scrambled data stream between the scrambler circuitry and the descrambler circuitry; and wherein the scrambler circuitry is further configured to perform, during a period (203, 205) between the upstream timeslots:
- scrambling a predetermined reference sequence (221a, 221b) according to the periodic scrambling pattern, thereby obtaining a scrambled reference sequence; and
- sending the scrambled reference sequence to the descrambler circuitry over the at least one data channel.

2. The optical network unit, ONU, according to claim 1, wherein the predetermined reference sequence (221a, 221b) is a sequence of bits that have the same logical value.

3. The optical network unit, ONU, according to any of the preceding claims, wherein the descrambler circuitry (240) is further configured to perform, determining the periodic scrambling pattern (228) for descrambling the at least one scrambled data stream (230, 231) based on the scrambled reference sequence and the predetermined reference sequence (221a, 221b).

4. The optical network unit, ONU, according to any of the preceding claims, wherein the descrambler circuitry (240) is further configured to perform, capturing at least a portion of the scrambled reference sequence within at least one capture buffer (401, 403).

5. The optical network unit, ONU, according to claim 3 and 4, wherein determining the periodic scrambling pattern (228) is based on the captured portion of the scrambled reference sequence and the predetermined reference sequence.

6. The optical network unit, ONU, according to claim 4, wherein the periodic scrambling pattern (228) has a pattern length, and the at least one capture buffer (401, 403) has a buffer size; and wherein the buffer size is an integer multiple of the pattern length.

7. The optical network unit, ONU, according to any of the preceding claims, wherein the scrambler circuitry (220) further comprises a controller (407) configured to perform, during the period (412, 417) between upstream timeslots, sending a control signal (305) to the descrambler circuitry indicative of that the scrambler circuitry is sending the scrambled reference sequence to the descrambler circuitry over the at least one data channel.

8. The optical network unit, ONU, according to claim 7, wherein the scrambler circuitry is further configured to perform adjusting the periodic scrambling pattern (228) between (415, 419) the end of an upstream timeslot (411, 416) and the control signal (413, 418) that follows the upstream timeslot.

9. The optical network unit, ONU, according to claim 8, wherein the adjusting is based on data expected to be transmitted from the ONU to the OLT within a next upstream timeslot (411, 416).

10. The optical network unit, ONU, according to any of the preceding claims, wherein the descrambler circuitry (240) is further configured to perform detecting bit errors by comparing the determined periodic scrambling pattern with one or more previously determined periodic scrambling patterns.

11. The optical network unit, ONU, according to claim 3, wherein the descrambler circuitry (240) is further configured to perform detecting bit errors by descrambling the scrambled reference sequence according to the periodic scrambling pattern determined by the descrambler circuitry.

12. The optical network unit, ONU, according to any of the preceding claims, wherein the scrambler circuitry (220) is included in a first circuitry of the ONU configured to process the at least one data stream; and wherein the descrambling circuitry (240) is included in a second circuitry of the ONU configured to interface with an optical fibre of the passive optical network to transmit the data to the optical line terminal.

13. An optical line terminal (300), OLT, configured to receive data (302) from one or more optical network units, ONUs (131, 132, 133, 134), during respective upstream timeslots (311, 312, 313, 314) within a passive optical network; wherein the OLT comprises a scrambler circuitry (220) configured to scramble (226, 227) at least one data stream (304, 305) according to a periodic scrambling pattern (228), and a descrambler circuitry (240) configured to descramble (243, 244) the at least one scrambled data stream (230, 231) according to the periodic scrambling pattern; and wherein the OLT further comprises at least one data channel (251, 252) for exchanging the at least one scrambled data stream between the scrambler circuitry and the descrambler circuitry; and wherein the scrambler circuitry is further configured to perform, during a period (315, 316, 317) between respective upstream timeslots (311, 312, 313, 314):
- scrambling a predetermined reference sequence (221a, 221b) according to the periodic scrambling pattern, thereby obtaining a scrambled reference sequence; and
- sending the scrambled reference sequence to the descrambler circuitry over the at least one data channel.

14. A method comprising, during a period between upstream timeslots for transmitting data from an optical network unit, ONU, to an optical line terminal, OLT, within a passive optical network:
- by a scrambler circuitry within the ONU, scrambling a predetermined reference sequence according to a periodic scrambling pattern, thereby obtaining a scrambled reference sequence; wherein the scrambler circuitry is configured to scramble at least one data stream according to the periodic scrambling pattern; and
- sending the scrambled reference sequence to a descrambler circuitry within the ONU over at least one data channel for exchanging the at least one scrambled data stream between the scrambler circuitry and the descrambler circuitry; wherein the descrambler circuitry is configured to descramble the at least one data stream according to the periodic scrambling pattern.

15. A method comprising, during a period between respective upstream timeslots for receiving data by an optical line terminal, OLT, from one or more optical network units, ONUs, within a passive optical network:
- by a scrambler circuitry within the OLT, scrambling a predetermined reference sequence according to a periodic scrambling pattern, thereby obtaining a scrambled reference sequence; wherein the scrambler circuitry is configured to scramble at least one data stream according to the periodic scrambling pattern; and
- sending the scrambled reference sequence to a descrambler circuitry within the OLT over at least one data channel for exchanging the at least one scrambled data stream between the scrambler circuitry and the descrambler circuitry; wherein the descrambler circuitry is configured to descramble the at least one data stream according to the periodic scrambling pattern.

## Patentansprüche

1. Optische Netzwerkeinheit (210), ONU, die konfiguriert ist, um Daten (232) an ein optisches Leitungsendgerät (110), OLT, während Upstream-Zeitschlitzen (201, 204, 206) innerhalb eines passiven optischen Netzwerks zu übertragen; wobei die ONU eine Verwürfelungsschaltung (220), die konfiguriert ist, um mindestens einen Datenstrom (222, 223) gemäß einem periodischen Verwürfelungsmuster (228) zu verwürfeln (226, 227), und eine Entwürfelungsschaltung (240) umfasst, die konfiguriert ist, um den mindestens einen verwürfelten Datenstrom (230, 231) gemäß dem periodischen Verwürfelungsmuster zu entwürfeln (243, 244); und wobei die ONU ferner mindestens einen Datenkanal (251, 252) zum Austauschen des mindestens einen verwürfelten Datenstroms zwischen der Verwürfelungsschaltung und der Entwürfelungsschaltung umfasst; und wobei die Verwürfelungsschaltung ferner konfiguriert ist, um während einer Periode (203, 205) zwischen den Upstream-Zeitschlitzen durchzuführen:
- Verwürfeln einer vorbestimmten Referenzsequenz (221a, 221b) gemäß dem periodischen Verwürfelungsmuster, wodurch eine verwürfelte Referenzsequenz erhalten wird; und
- Senden der verwürfelten Referenzsequenz an die Entwürfelungsschaltung über den mindestens einen Datenkanal.

2. Optische Netzwerkeinheit, ONU, nach Anspruch 1, wobei die vorbestimmte Referenzsequenz (221a, 221b) eine Sequenz von Bits ist, die denselben logischen Wert aufweisen.

3. Optische Netzwerkeinheit, ONU, nach einem der vorhergehenden Ansprüche, wobei die Entwürfelungsschaltung (240) ferner konfiguriert ist, um das Bestimmen des periodischen Verwürfelungsmusters (228) zum Entwürfeln des mindestens einen verwürfelten Datenstroms (230, 231) basierend auf der verwürfelten Referenzsequenz und der vorbestimmten Referenzsequenz (221a, 221b) durchzuführen.

4. Optische Netzwerkeinheit, ONU, nach einem der vorhergehenden Ansprüche, wobei die Entwürfelungsschaltung (240) ferner konfiguriert ist, um das Erfassen mindestens eines Abschnitts der verwürfelten Referenzsequenz in mindestens einem Erfassungspuffer (401, 403) durchzuführen.

5. Optische Netzwerkeinheit, ONU, nach den Ansprüchen 3 und 4, wobei das Bestimmen des periodischen Verwürfelungsmusters (228) auf dem erfassten Abschnitt der verwürfelten Referenzsequenz und der vorbestimmten Referenzsequenz basiert.

6. Optische Netzwerkeinheit, ONU, nach Anspruch 4, wobei das periodische Verwürfelungsmuster (228) eine Musterlänge aufweist und der mindestens eine Erfassungspuffer (401, 403) eine Puffergröße aufweist; und wobei die Puffergröße ein ganzzahliges Vielfaches der Musterlänge ist.

7. Optische Netzwerkeinheit, ONU, nach einem der vorhergehenden Ansprüche, wobei die Verwürfelungsschaltung (220) ferner einen Controller (407) umfasst, der konfiguriert ist, um während der Periode (412, 417) zwischen Upstream-Zeitschlitzen das Senden eines Steuersignals (305) an die Entwürfelungsschaltung durchzuführen, das anzeigt, dass die Verwürfelungsschaltung die verwürfelte Referenzsequenz an die Entwürfelungsschaltung über den mindestens einen Datenkanal sendet.

8. Optische Netzwerkeinheit, ONU, nach Anspruch 7, wobei die Verwürfelungsschaltung ferner konfiguriert ist, um das Anpassen des periodischen Verwürfelungsmusters (228) zwischen (415, 419) dem Ende eines Upstream-Zeitschlitzes (411, 416) und dem Steuersignal (413, 418), das dem Upstream-Zeitschlitz folgt, durchzuführen.

9. Optische Netzwerkeinheit, ONU, nach Anspruch 8, wobei das Anpassen auf Daten basiert, die von der ONU an das OLT innerhalb eines nächsten Upstream-Zeitschlitzes (411, 416) zu übertragen sind.

10. Optische Netzwerkeinheit, ONU, nach einem der vorhergehenden Ansprüche, wobei die Entwürfelungsschaltung (240) ferner konfiguriert ist, um das Erkennen von Bitfehlern durch Vergleichen des bestimmten periodischen Verwürfelungsmusters mit einem oder mehreren zuvor bestimmten periodischen Verwürfelungsmustern durchzuführen.

11. Optische Netzwerkeinheit, ONU, nach Anspruch 3, wobei die Entwürfelungsschaltung (240) ferner konfiguriert ist, um das Erkennen von Bitfehlern durch Entwürfeln der verwürfelten Referenzsequenz gemäß dem von der Entwürfelungsschaltung bestimmten periodischen Verwürfelungsmuster durchzuführen.

12. Optische Netzwerkeinheit, ONU, nach einem der vorhergehenden Ansprüche, wobei die Verwürfelungsschaltung (220) in einer ersten Schaltung der ONU enthalten ist, die konfiguriert ist, um den mindestens einen Datenstrom zu verarbeiten; und wobei die Entwürfelungsschaltung (240) in einer zweiten Schaltung der ONU enthalten ist, die konfiguriert ist, um eine Schnittstelle mit einer optischen Faser des passiven optischen Netzwerks zu bilden, um die Daten an das optische Leitungsendgerät zu übertragen.

13. Optisches Leitungsendgerät (300), OLT, das konfiguriert ist, um Daten (302) von einer oder mehreren optischen Netzwerkeinheiten, ONUs (131, 132, 133, 134), während jeweiliger Upstream-Zeitschlitze (311, 312, 313, 314) innerhalb eines passiven optischen Netzwerks zu empfangen; wobei das OLT eine Verwürfelungsschaltung (220), die konfiguriert ist, um mindestens einen Datenstrom (304, 305) gemäß einem periodischen Verwürfelungsmuster (228) zu verwürfeln (226, 227), und eine Entwürfelungsschaltung (240) umfasst, die konfiguriert ist, um den mindestens einen verwürfelten Datenstrom (230, 231) gemäß dem periodischen Verwürfelungsmuster zu entwürfeln (243, 244); und wobei das OLT ferner mindestens einen Datenkanal (251, 252) zum Austauschen des mindestens einen verwürfelten Datenstroms zwischen der Verwürfelungsschaltung und der Entwürfelungsschaltung umfasst; und wobei die Verwürfelungsschaltung ferner konfiguriert ist, um während einer Periode (315, 316, 317) zwischen jeweiligen Upstream-Zeitschlitzen (311, 312, 313, 314) durchzuführen:
- Verwürfeln einer vorbestimmten Referenzsequenz (221a, 221b) gemäß dem periodischen Verwürfelungsmuster, wodurch eine verwürfelte Referenzsequenz erhalten wird; und
- Senden der verwürfelten Referenzsequenz an die Entwürfelungsschaltung über den mindestens einen Datenkanal.

14. Verfahren, umfassend, während einer Periode zwischen Upstream-Zeitschlitzen für die Übertragung von Daten von einer optischen Netzwerkeinheit, ONU, an ein optisches Leitungsendgerät, OLT, innerhalb eines passiven optischen Netzwerks:
- durch eine Verwürfelungsschaltung innerhalb der ONU, Verwürfeln einer vorbestimmten Referenzsequenz gemäß einem periodischen Verwürfelungsmuster, wodurch eine verwürfelte Referenzsequenz erhalten wird; wobei die Verwürfelungsschaltung konfiguriert ist, um mindestens einen Datenstrom gemäß dem periodischen Verwürfelungsmuster zu verwürfeln; und
- Senden der verwürfelten Referenzsequenz an eine Entwürfelungsschaltung innerhalb der ONU über mindestens einen Datenkanal zum Austauschen des mindestens einen verwürfelten Datenstroms zwischen der Verwürfelungsschaltung und der Entwürfelungsschaltung; wobei die Entwürfelungsschaltung konfiguriert ist, um den mindestens einen Datenstrom gemäß dem periodischen Verwürfelungsmuster zu entwürfeln.

15. Verfahren, umfassend, während einer Periode zwischen jeweiligen Upstream-Zeitschlitzen für den Empfang von Daten durch ein optisches Leitungsendgerät, OLT, von einer oder mehreren optischen Netzwerkeinheiten, ONUs, innerhalb eines passiven optischen Netzwerks:
- durch eine Verwürfelungsschaltung innerhalb des OLT, Verwürfeln einer vorbestimmten Referenzsequenz gemäß einem periodischen Verwürfelungsmuster, wodurch eine verwürfelte Referenzsequenz erhalten wird; wobei die Verwürfelungsschaltung konfiguriert ist, um mindestens einen Datenstrom gemäß dem periodischen Verwürfelungsmuster zu verwürfeln; und
- Senden der verwürfelten Referenzsequenz an eine Entwürfelungsschaltung innerhalb des OLT über mindestens einen Datenkanal zum Austauschen des mindestens einen verwürfelten Datenstroms zwischen der Verwürfelungsschaltung und der Entwürfelungsschaltung; wobei die Entwürfelungsschaltung konfiguriert ist, um den mindestens einen Datenstrom gemäß dem periodischen Verwürfelungsmuster zu entwürfeln.

## Revendications

1. Unité de réseau optique (210), ONU, configurée pour transmettre des données (232) à un terminal de ligne optique (110), OLT, pendant des créneaux temporels montants (201, 204, 206) au sein d'un réseau optique passif ; dans laquelle l'ONU comprend un circuit embrouilleur (220) configuré pour embrouiller (226, 227) au moins un flux de données (222, 223) selon un motif d'embrouillage périodique (228), et un circuit désembrouilleur (240) configuré pour désembrouiller (243, 244) le au moins un flux de données embrouillé (230, 231) selon le motif d'embrouillage périodique ; et dans laquelle l'ONU comprend en outre au moins un canal de données (251, 252) pour échanger le au moins un flux de données embrouillé entre le circuit embrouilleur et le circuit désembrouilleur ; et dans laquelle le circuit embrouilleur est en outre configuré pour effectuer, pendant une période (203, 205) entre les créneaux temporels montants :
- embrouiller une séquence de référence prédéterminée (221a, 221b) selon le motif d'embrouillage périodique, obtenant ainsi une séquence de référence embrouillée ; et
- envoyer la séquence de référence embrouillée au circuit désembrouilleur par le au moins un canal de données.

2. Unité de réseau optique, ONU, selon la revendication 1, dans laquelle la séquence de référence prédéterminée (221a, 221b) est une séquence de bits ayant la même valeur logique.

3. Unité de réseau optique, ONU, selon l'une quelconque des revendications précédentes, dans laquelle le circuit désembrouilleur (240) est en outre configuré pour effectuer la détermination du motif d'embrouillage périodique (228) pour désembrouiller le au moins un flux de données embrouillé (230, 231) sur la base de la séquence de référence embrouillée et de la séquence de référence prédéterminée (221a, 221b).

4. Unité de réseau optique, ONU, selon l'une quelconque des revendications précédentes, dans laquelle le circuit désembrouilleur (240) est en outre configuré pour effectuer la capture d'au moins une portion de la séquence de référence embrouillée dans au moins un tampon de capture (401, 403).

5. Unité de réseau optique, ONU, selon les revendications 3 et 4, dans laquelle la détermination du motif d'embrouillage périodique (228) est basée sur la portion capturée de la séquence de référence embrouillée et la séquence de référence prédéterminée.

6. Unité de réseau optique, ONU, selon la revendication 4, dans laquelle le motif d'embrouillage périodique (228) a une longueur de motif, et le au moins un tampon de capture (401, 403) a une taille de tampon ; et dans laquelle la taille de tampon est un multiple entier de la longueur de motif.

7. Unité de réseau optique, ONU, selon l'une quelconque des revendications précédentes, dans laquelle le circuit embrouilleur (220) comprend en outre un contrôleur (407) configuré pour effectuer, pendant la période (412, 417) entre les créneaux temporels montants, l'envoi d'un signal de commande (305) au circuit désembrouilleur indiquant que le circuit embrouilleur envoie la séquence de référence embrouillée au circuit désembrouilleur par le au moins un canal de données.

8. Unité de réseau optique, ONU, selon la revendication 7, dans laquelle le circuit embrouilleur est en outre configuré pour effectuer l'ajustement du motif d'embrouillage périodique (228) entre (415, 419) la fin d'un créneau temporel montant (411, 416) et le signal de commande (413, 418) qui suit le créneau temporel montant.

9. Unité de réseau optique, ONU, selon la revendication 8, dans laquelle l'ajustement est basé sur des données devant être transmises de l'ONU à l'OLT au sein d'un prochain créneau temporel montant (411, 416).

10. Unité de réseau optique, ONU, selon l'une quelconque des revendications précédentes, dans laquelle le circuit désembrouilleur (240) est en outre configuré pour effectuer la détection d'erreurs binaires en comparant le motif d'embrouillage périodique déterminé avec un ou plusieurs motifs d'embrouillage périodiques précédemment déterminés.

11. Unité de réseau optique, ONU, selon la revendication 3, dans laquelle le circuit désembrouilleur (240) est en outre configuré pour effectuer la détection d'erreurs binaires en désembrouillant la séquence de référence embrouillée selon le motif d'embrouillage périodique déterminé par le circuit désembrouilleur.

12. Unité de réseau optique, ONU, selon l'une quelconque des revendications précédentes, dans laquelle le circuit embrouilleur (220) est inclus dans un premier circuit de l'ONU configuré pour traiter le au moins un flux de données ; et dans laquelle le circuit désembrouilleur (240) est inclus dans un second circuit de l'ONU configuré pour s'interfacer avec une fibre optique du réseau optique passif afin de transmettre les données au terminal de ligne optique.

13. Terminal de ligne optique (300), OLT, configuré pour recevoir des données (302) d'une ou plusieurs unités de réseau optique, ONUs (131, 132, 133, 134), pendant des créneaux temporels montants respectifs (311, 312, 313, 314) au sein d'un réseau optique passif ; dans lequel l'OLT comprend un circuit embrouilleur (220) configuré pour embrouiller (226, 227) au moins un flux de données (304, 305) selon un motif d'embrouillage périodique (228), et un circuit désembrouilleur (240) configuré pour désembrouiller (243, 244) le au moins un flux de données embrouillé (230, 231) selon le motif d'embrouillage périodique ; et dans lequel l'OLT comprend en outre au moins un canal de données (251, 252) pour échanger le au moins un flux de données embrouillé entre le circuit embrouilleur et le circuit désembrouilleur ; et dans lequel le circuit embrouilleur est en outre configuré pour effectuer, pendant une période (315, 316, 317) entre des créneaux temporels montants respectifs (311, 312, 313, 314) :
- embrouiller une séquence de référence prédéterminée (221a, 221b) selon le motif d'embrouillage périodique, obtenant ainsi une séquence de référence embrouillée ; et
- envoyer la séquence de référence embrouillée au circuit désembrouilleur par le au moins un canal de données.

14. Procédé comprenant, pendant une période entre des créneaux temporels montants pour la transmission de données d'une unité de réseau optique, ONU, à un terminal de ligne optique, OLT, au sein d'un réseau optique passif :
- par un circuit embrouilleur au sein de l'ONU, embrouiller une séquence de référence prédéterminée selon un motif d'embrouillage périodique, obtenant ainsi une séquence de référence embrouillée ; dans lequel le circuit embrouilleur est configuré pour embrouiller au moins un flux de données selon le motif d'embrouillage périodique ; et
- envoyer la séquence de référence embrouillée à un circuit désembrouilleur au sein de l'ONU par au moins un canal de données pour échanger le au moins un flux de données embrouillé entre le circuit embrouilleur et le circuit désembrouilleur ; dans lequel le circuit désembrouilleur est configuré pour désembrouiller le au moins un flux de données selon le motif d'embrouillage périodique.

15. Procédé comprenant, pendant une période entre des créneaux temporels montants respectifs pour la réception de données par un terminal de ligne optique, OLT, d'une ou plusieurs unités de réseau optique, ONUs, au sein d'un réseau optique passif :
- par un circuit embrouilleur au sein de l'OLT, embrouiller une séquence de référence prédéterminée selon un motif d'embrouillage périodique, obtenant ainsi une séquence de référence embrouillée ; dans lequel le circuit embrouilleur est configuré pour embrouiller au moins un flux de données selon le motif d'embrouillage périodique ; et
- envoyer la séquence de référence embrouillée à un circuit désembrouilleur au sein de l'OLT par au moins un canal de données pour échanger le au moins un flux de données embrouillé entre le circuit embrouilleur et le circuit désembrouilleur ; dans lequel le circuit désembrouilleur est configuré pour désembrouiller le au moins un flux de données selon le motif d'embrouillage périodique.
